# EUROPEAN PATENT APPLICATION

(11) **EP 0 530 406 A1**
(43) Date of publication of application: **10.03.1993**
(21) Application number: 91202224.1
(22) Date of filing: 30.08.1991
(51) Int. Cl.: A01K 11/00

(54) **An ear tag for identifying an animal and a device for attaching the ear tag to an ear**

(71) Applicant: Hut, Hindrik, NL-7824 RV Emmen (NL)
(72) Inventor: Hut, Hindrik, NL-7824 RV Emmen (NL)
(74) Representative: Smulders, Theodorus A.H.J., Ir.

(57) **Abstract**

A first unit (1) of the ear tag comprises a first button shaped element (3) and first connecting means (4) extending from said first element (3). A second unit (2) of the ear tag comprises a second button shaped element (5) and second connecting means (6) provided with a cavity (7) behind an opening (15) for receiving the far end (8) of the first connecting means (4), The first connecting means (4) are adapted for perforating an ear (9) and for subsequent plastic deformation inside the cavity (7). Compared with conventional ear tags, a reduced frequency of ear injuiries can be achieved and fraudulous exchanging of ear tags can be counteracted. The disclosed ear tag can be produced at low cost and can easily be fixed to the ear. A device for attaching the disclosed ear tag to an ear is also described.

## Description

The invention concerns an ear tag or ear mark for identifying an animal comprising a first unit and a second unit, the first unit comprising a first button shaped element and first connecting means extending from said first element, the second unit comprising a second button shaped element and second connecting means provided with a cavity behind an opening facing the first unit for receiving the far end of the first connecting means, said first connecting means being adapted for perforating an ear and for subsequent plastic deformation inside the cavity, and at least one of the button shaped elements being undismountably attached to the corresponding connecting means.

For attaching the ear tag according to the present invention to the ear of an animal, the first unit is brought in a position facing a surface of the ear, the connecting means being oriented towards the ear. Then the first connecting means are pressed through the ear perforating the ear and the units are moved together, entering the first connecting means into the cavity, until the far end of the first connecting means abuts against the bottom of the cavity of the second connecting means and is plastically deformated within said cavity. Due to the deformation of the far end in the cavity, said far end is locked up in said cavity providing an attachment of the first unit to the second unit.

An advantage of the ear tag according to the present invention over conventional ear tags is, that ear injuries caused by excessive forces exerted on the ear tag are less likely to occur. Such injuries are for example caused by scratching by the animal wearing the ear tag, biting into the ear tag by other animals or clinging of the ear tag to fixed objects. The ear tag according to the present invention can be placed at some distance of the edge of the ear, the button shaped elements spaced apart at a distance adapted at the local thickness of the ear and therefore protruding very little from the ear surface.

At least one of the connecting means of the tag according to the present invention cannot be reached with any ordinary tool without damaging the corresponding button shaped element. Furthermore the connection can easily be arranged to be so strong, that for a loosening effort to be succesful, forces have to be applied which will damage the button shaped elements. Fraudulent practices involving exchanging ear tags, such as multiple collection of subventions for a single animal or delivery of other animals than the ones ordered, can thus be counteracted.

The ear tag according to the present invention can be produced at low cost and can easily be fixed to the ear.

Since the ear is perforated by a single use element of the ear tag, contamination of animals caused by perforating means used for preforating ears of subsequent animals is prevented.

The invention is also embodied in a device for attaching an ear tag according the invention to an ear, said device comprising a first jaw and a second jaw opposite said first jaw, the first jaw having a recess shaped in correspondence with the shape of the first button shaped element, the second jaw having a recess shaped in correspondence with the shape of the second button shaped element, said recesses being positioned diametrically opposite each other for entering the far end of the first connecting means into the cavity of the second connecting means and for exerting a pressure onto the first connecting means bending a portion of the first connecting means in the cavity around at least until said portion is prevented from being removed from said cavity.

Using the device according to the present invention, the first unit is placed in the recess of the first jaw, the second unit is placed in the recess of the second jaw to provide easy control of these units during attachment of the ear tag to an ear. Subsequently an ear portion is moved between the first and the second unit and the jaws are pressed towards each other until the far end of the first connecting means is deformated inside the cavity of the second connecting means. The jaws can for example form parts of a pair of tongs, but can also be arranged to be operated by any other means for exerting a sufficient force pressing the jaws towards each other.

The invention will now be explained and described in more detail on the basis of a currently preferred embodiment, referring to the accompanying drawing, in which:
Fig. 1 is a top view of an ear tag according to the present invention,
fig. 2 is a side view in cross-section along the line II-II in fig. 1,
fig. 3 is a side view according to fig. 2 of a first unit of the ear tag according to figs. 1 and 2,
fig. 4 is a side view according to fig. 2 of a second unit of the ear tag according to figs. 1 and 2,
fig. 5 is a top view of a second connecting means to be incorporated in a second unit according to fig. 4,
fig. 6 is a side view of the connecting means according to fig. 5, and
fig. 7 is a side view in cross-section along the line VI-VI in fig. 5.

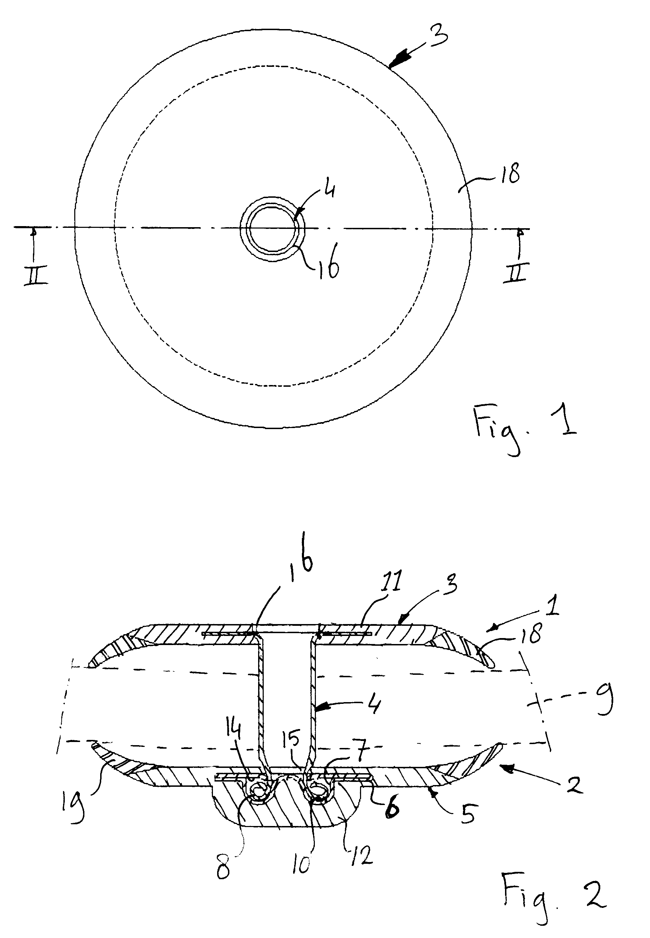

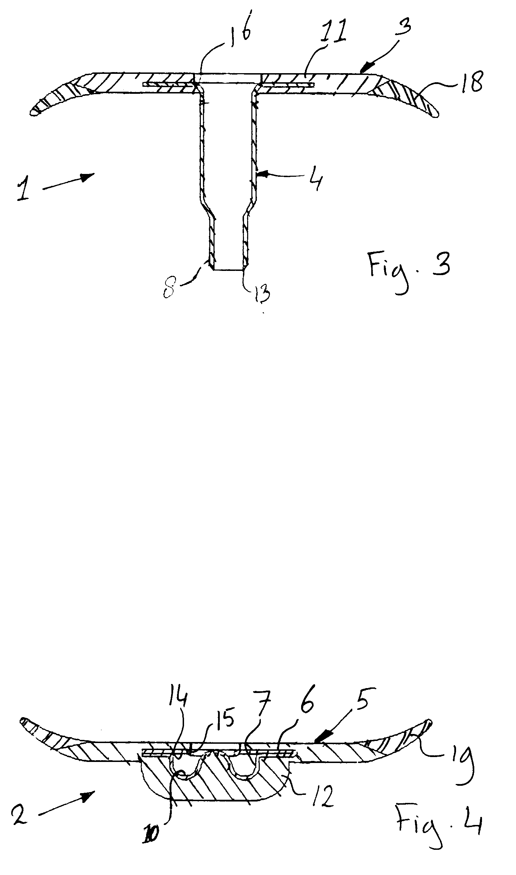

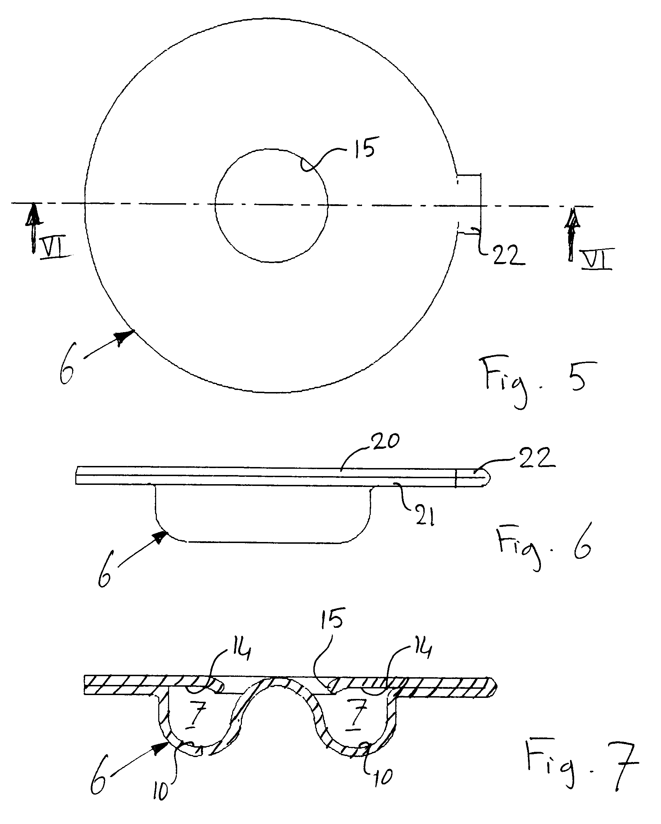

In fig. 2 a currently preferred embodiment of the ear tag according to present invention for identifying an animal, is shown in connected condition. In figs 3 resp. 4, a first unit 1 and a second unit 2 of the ear tag according to this embodiment are shown in unconnected condition, that is, before being attached to the ear of an animal.

The first unit 1 comprises a first button shaped element 3 and first connecting means 4 extending from said first element 3. The second unit 2 comprises a second button shaped element 5 and second connecting means 6 provided with a cavity 7 behind an opening 15 facing the first unit 1 for receiving the far end 8 of the first connecting means 4.

The first connecting means are adapted for perforating an ear 9 (indicated by dotted lines in fig. 2) and for subsequent plastic deformation inside the cavity 7 (see fig. 2). The button shaped elements 3 and 5 are undismountably attached to the corresponding connecting means 4 resp. 6.

For attaching the ear tag according to the present embodiment to an ear 9 of an animal the first unit 1 and the second unit 2 are positioned diametrically opposite each other facing opposite surface portions of the ear 9, the connecting means 4, 6 turned towards the ear. Then the units 1, 2 are pressed together, the first connecting means 4 perforating the ear 9 and moving towards the second unit 2. After the far end 8 of the first connecting means 4 has perforated the ear, it is entered into the cavity 7 until it abuts against the bottom 10 of the cavity 7 of the second connecting means 6 and is subsequently deformated plastically in this cavity 7. Due to the plastic deformation of the far end 8 inside the cavity 7, this far end 8 is locked up in this cavity 7 providing an attachment of the first unit 1 to the second unit 2.

The button shaped elements 3, 5 are made of mouldable material 11, 12 moulded - preferably injection moulded - around resp. parts of the corresponding connecting means 4, 6 enabling production of large quantities of the present ear tag at low costs and providing a stable undismountable attachment of the button shaped element 3, 5 to the connecting means 4 resp. 6.

The far end 8 of the first connecting means 4 is thin walled. In unconnected condition, it has a sharp terminal edge 13. When perforating the ear, the far end 8 can cut through the ear, displacing very little ear tissue and therefore causing a relatively small, quickly healing wound in the ear.

A portion of the cavity 7 in the second connecting means 6 is bounded by a wall portion 14 extending from the opening 15 for receiving the far end 8 of the first connecting means 4. The bottom portion 10 of said cavity 7 forms a groove having a substantially semi circular cross-section partially extending opposite the wall portion 14 extending from the opening 15. When the thin walled far end 8 of the first connecting means abuts against the semi-circular bottom-portion 10 of the cavity 7, it is deflected into a portion of the cavity 7 bounded by the wall portion 14 extending from the opening 15 (see fig. 2). This wall portion 14 then holds the deflected far end 8 locked in the cavity 7, providing a very strong undismountable connection between the first and the second unit 1 and 2.

Preferably the far end 8 is deflected until it is at least curled backwards against the wall portion 14 extending from the opening 15. Thus an even stronger connection with at most very little play can be obtained.

In the present embodiment, the far end 8 of the first connecting means 4 is hollow and the groove 10 extends along a circumferential path shaped in accordance with the cross-sectional shape of the far end 8 of the first connecting means 4. Since viewed in cross section, the thin walled first connecting means 4 have a closed circumferential shape, it can be formed without any sharp side edges. This is advantageous for providing a smooth contact area between the first connecting means 4 and the perforation in the ear 9. This in turn facilitates healing of the wound and the resistance of the perforation against forces exerted upon the ear tag. The portion of the ear cut away when perforating the ear 9 can simply be left in the first perforating means 4 and will dry out.

The second connecting means 6 of the ear tag according to the presented embodiment of the invention are made of a single blank of sheet metal, comprising a first circular portion 20, a second circular portion 21 and an intermediate portion 22 connecting the first and the second portion 20 and 21. The first and the second circular portions 20 and 21 are folded together into a coaxial configuration by bending the intermediate portion 22. In a simple manner the second connecting means can thus be made in one piece.

For counteracting fraudulous exchanging of ear tags, preferably at least one of the button shaped elements has a weakened portion which is damaged if a force larger than a predetermined force is exerted upon said element. This predetermined force should be determined to be smaller than the maximum force the connection between the first and the second unit 1 an 2 can resist. If an attempt is made to dismount the connection between the first and the second unit, before said connection is loosened, the weakened portion will be damaged.

In the present embodiment weakened portions are formed by a circumferential recess 16 in the first connecting means 4. This recess 16 causes a local stress concentration when, in an attempt to loosen the connection between the first and the second unit 1, 2, a peripheral part of the respective button shaped element 3, 5 is pulled away from the other button shaped element 5 resp. 3.

The button shaped elements 3, 5 comprise peripheral flanges 18, 19 of resilient material and curved towards the position of the other button shaped element 5 resp. 3 in connected condition. These flanges 18, 19 provide a close fit and a smooth transition from the ear surface to the button shaped element further avoiding clinging of the button shaped elements 3, 5 and keeping dirt out of the area between the ear 9 and the button shaped elements 3, 5. If the ear grows thicker as the animals grows older, the resilient flanges 18, 19 can bend away following the growth of the ear 9.

Although preferably both button shaped elements 3, 5 comprise flexible flanges to obtain a maximum degree of adaptability, in some cases a sufficient degree of adaptability is already obtained obtained if only one of the button shaped elements is provided with flexible flanges curved towards the ear surface.

The resilient flanges 18, 19 are preferably made of material which is injection moulded around an insert forming the central portion of said button shaped element. Thus a reliable connection of the resilient material to the central portion of the button shaped element can be obtained at low cost.

To obtain an enlarged variety of colour codings, the flanges 18, 19 can have another colour than the associated central portion of the button shaped element 3, 5.

An enlarged variety of easily visible codings can also be obtained by providing button shaped elements having different shapes seen in top view. The ear tag according to the present embodiment has a circular shape in top view. Other possible shapes are for example triangular, square, star shaped, each preferably with rounded corners.

For further identification of an animal, a visually readable sign can be provided in at least one of the button shaped elements. To avoid deletion, such a sign is preferably engraved.

To further counteract fraudulous manipulations, such as multiple collection of subventions for a single animal or delivery of other animals than the ones ordered, such an engraved code is preferably verifiable.

For electromagnetic identification of an animal, for example for computer controlled feeding of individual animals, at least one of the button shaped elements can be injection moulded around an insert in form of a chip. Such a chip can for example be mounted into one of the connecting means to avoid the need of an additional injection moulding step. The connecting means can be arranged to form an antenna for the chip.

## Claims

1. An ear tag for identifying an animal comprising a first unit (1) and a second unit (2),
the first unit (1) comprising a first button shaped element (3) and first connecting means (4) extending from said first element (3),
the second unit (2) comprising a second button shaped element (5) and second connecting means (6) provided with a cavity (7) behind an opening (15) for receiving the far end (8) of the first connecting means (4),
said first connecting means (4) being adapted for perforating an ear (9) and for subsequent plastic deformation inside the cavity (7), and
at least one of the button shaped elements (3, 5) being undismountably attached to the corresponding connecting means (4, 6).

2. An ear tag according to claim 1, characterized in that at least one of the button shaped elements (3, 5) is made of mouldable material (11, 12) moulded around at least a part of the corresponding connecting means (4, 6).

3. An ear tag according to claim 2, characterized in that the button shaped element (3, 5) is injection-moulded around at least a part of an insert forming the corresponding connecting means (4, 6).

4. An ear tag according to one of the preceding claims, characterized in that the far end (8) of the first connecting means (4) is thin walled and, while in unconnected condition, has a sharp terminal edge (13).

5. An ear tag according to claim 4, characterized in that a portion of the cavity (7) in the second connecting means (6) is bounded by a wall portion (14) extending from the opening (15) for receiving the far end (8) of the first connecting means (4) and the bottom portion (10) of said cavity (7) forms a groove having a substantially semi-circular cross-section partially extending opposite said wall portion (14).

6. An ear tag according to claim 5, characterized in that the far end (8) of the first connecting means (4) is hollow and the groove extends along a circumferential path shaped in accordance with the cross-sectional shape of the far end (8) of the first connecting means (4).

7. An ear tag according to one of the preceding claims, characterized in that at least one of the units (1, 2) has a weakened portion (16) which is damaged if a force larger than a predetermined force is exerted upon said element (3, 5), said predetermined force being smaller than the maximum force the connection between the first and the second unit (1 and 2) can resist.

8. An ear tag according to one of the preceding claims, characterized in that at least one of the button shaped elements (3, 5) comprises a peripheral flange (18, 19) of resilient material and curved towards the position where the other button shaped element (5, 3) is to be located in connected condition.

9. An ear tag according to claim 8, characterized in that the flange (18, 19) of resilient material is injection moulded around an insert forming the central portion of said button shaped element (3, 5) .

10. An ear tag according to claim 8, characterized in that the flange (18, 19) has another colour than the central portion.

11. An ear tag according to one of the preceding claims, characterized in that at least one of the button shaped elements (3, 5) is injection moulded around an insert in form of a chip for electromagnetic identification of the ear tag.

12. An ear tag according to one of the preceding claims, characterized in that a visually readable sign is engraved in at least one of the button shaped elements (3, 5).

13. An ear tag according to claim 11 or 12, characterized in that a code identifying the ear tag is verifiable.

14. First unit (1) for connection with a second unit (2) for forming an ear tag according to one of the preceding claims.

15. Second unit (2) for connection with a first unit (1) for forming an ear tag according to one of the claims 1-13.

16. Device for attaching an ear tag according to one of the claims 1-13 to an ear, said device comprising a first jaw and a second jaw opposite said first jaw, the first jaw having a recess shaped in correspondence with the shape of the first button shaped element (3), the second jaw having a recess shaped in correspondence with the shape of the second button shaped element (5), said recesses being positioned diametrically opposite each other for entering the far end (8) of the first connecting means (4) into the cavity (7) of the second connecting means (6) and for exerting a pressure onto the first connecting means bending a portion of the first connecting means (4) in the cavity (7) around at least until said portion is prevented from being removed from said cavity (7).
